# EUROPEAN PATENT SPECIFICATION

(11) **EP 2 248 433 B1**
(45) Date of publication and mention of the grant of the patent: **05.06.2019**
(21) Application number: 10380063.7
(22) Date of filing: 04.05.2010
(51) Int. Cl.: A22C 7/00, A23P 30/10

(54) **Machine for crushed edible product paste ball formation**
Maschine zur Bildung von Bällchen von zerstoßenen, essbaren Produktpasten
Machine pour la formation d'une boule de pâte de produits comestibles broyés

(30) Priority: 06.05.2009 ES 200930131
(43) Date of publication of application: 10.11.2010
(73) Proprietor: Internacional Olivarera, S.A., 41700 Dos Hermanas Sevilla (ES)
(72) Inventor: Agroba Rodriguez, Angel, 41700 Dos Hermanas (ES)
(74) Representative: Carvajal y Urquijo, Isabel

(56) References cited:
- ES-A6- 2 021 969
- US-A- 4 781 557
- US-A- 5 100 681
- US-A1- 2008 008 799

## Description

### FIELD OF THE INVENTION

The present invention refers to the technical field of machinery used for the production of edible product fillings, and more specifically, to the production of ball-shaped paste fillings from crushed products, used to fill previously de-stoned olives.

### BACKGROUND OF THE INVENTION

It is known in the state of the art that fillings used for olives are usually made of edible products such as anchovies and peppers, which are crushed to form a paste. The paste thus obtained is usually treated with gelling products, thus obtaining a band cut in small strips, and these strips are later inserted in previously de-stoned olives. This system has several disadvantages. The first of them is that the handling of the strips for their insertion in the olives is difficult and requires great amount of time, which hinders a high production and increases the cost thereof. Besides, the fact that the paste is cut in strips prevents the filling from completely occupying the entire cavity of the olive, which produces deformations of the olives and even their breaking due to the pressure they exert against one another in the transport and storing.

In patent document ES 2 021 969 these inconveniences were solved by means of a machine for paste ball formation which produced ball-shaped or rounded portions, in a form and size similar to the stone which has been extracted from the olive. Thus, balls are handled easily, in a similar way to the olives, their insertion therein is much faster and more economical, and at the same time the constitution and operation of the machines used for the filling can be simplified. Besides, through the balls, the olive is completely stuffed and compact, thus obtaining a greater consistency and better presentation thereof. The inconveniency of this machine is that the paste ball collection means when they are already formed consist of a set of buckets arranged in continuous transport mechanisms, which causes ball collection and transport not to be completely continuous, and also increases the costs of the manufacturing and maintenance of the machine, as it has a great number of mechanisms, and the synchronization of the passage of buckets with the ball fall is necessary. Additionally, the number of breakdowns caused by obstructions produced by the fall of the balls between the buckets is rather high.

It was therefore desirable that a system which attained a formation, collection and transport of paste balls for the filling of olives avoiding the existing inconveniences in the previous systems of the state of the art.

### DESCRIPTION OF THE INVENTION

The present invention solves the existing problems in the state of the art by a machine according to claim 1, for the formation of crushed edible product paste balls, which will serve as fillings, mainly for previously de-stoned olives. The machine is formed by a deposit containing the paste, which is closed in its lower part by a rotation cylinder with horizontal axis, which has a plurality of radial paste dosing chambers inside it, formed from the outer surface of said rotating cylinder and aligned in rows in an annular and axial manner. Besides, the machine has a paste intake and ejection mechanism, for the formation of the balls, which first of all carries out the paste suction into the radial chambers of the rotating cylinder, and the later ejection of the paste ball through said radial chambers into paste ball collection and transport means which take them to storing means of said balls, or to other machines in charge of carrying out the filling of the olives.

The collection and transport means of the paste balls, which collect them when they are ejected from the rotating cylinder, are formed by an elongated tank open in its upper part, which is arranged right under the deposit and the rotating cylinder, transversely to the rotating cylinder. The tank has a width substantially equal to the length of the rotating cylinder to be able to receive the paste balls of the entire length of the rows of dosing radial chambers.

The tank is filled with a hardening solution of the paste balls in water, in which said balls float. The water recirculates through the recirculation circuit, which absorbs the water in the final section of the tank and pours it in the initial section, thus originating a current which transports the paste balls from the point of the tank in which they enter to the outlet section.

Besides, the machine has water flow variation means arranged in the tank, which vary the water flow circulating in it, so that it is possible to change the speed of the paste ball displacement along said tank.

According to an embodiment of the paste intake and ejection mechanism, it has a piston arranged in each one of the paste dosing radial chambers, being said piston mobile along said radial chamber. All the pistons belonging to a row of radial chambers are connected at their inner end to a drive shaft, which will provide the displacement to the entire row of pistons. This drive shaft goes through the rotating cylinder longitudinally and its ends are mounted on plates parallel to the covers of the rotating cylinder ends, each one of them to a cylinder end. These plates have an eccentric annular channel, where the ends of the shafts rest, and which serves as a guide thereto, so that the path of the eccentric annular channel leads the displacement of the shafts connected to the different rows of pistons, which in turn produces the alternative movement of the pistons for the intake and later ejection of the paste through the radial chambers.

In order to attain this alternative movement of the pistons, the eccentric annular channel has, in the rotation direction of the rotating cylinder, a first section of constant maximum radius from the lowest point of the channel, point in which the pistons have ejected the paste balls through the radial chambers, next a second section with decreasing radius, along which the pistons retract and in this way the intake of the paste into the radial chambers is carried out, having its final section a constant radius, and finally, a third section tangential to this second section, which ends in the lowest point of the channel, and which is the origin of the first section, along which the pistons are expanded and the ejection of the paste balls is carried out from the radial chambers.

According to the invention, the flow variation means of the machine for the formation of paste balls have a mobile gate dividing the tank into a main duct through which the flow transporting the paste balls circulates, and a second duct through which there circulates the part of the flow deviated from the main duct by the gate. Thus, the movement of the gate enables the size variation of the main and secondary ducts, such that the size increase of the main duct and the size reduction of the secondary duct produce a flow increase through the main duct and an increase of the transport speed

of the paste balls, while the size reduction of the main duct and the size increase of the secondary duct produce a flow reduction through the main duct and therefore, a reduction of the transport speed of the paste balls.

Besides, the machine object of the preset invention can present a mobile transverse barrier arranged in the tank, which enables the passage of water through it while preventing the passage of the paste balls. This mobile barrier has different opening degrees, which enables greater or smaller flow of paste balls according to the needs at every moment.

### DESCRIPTION OF THE DRAWINGS

Next, for an easier understanding of the invention, a non-limiting exemplary embodiment of the invention will be described with reference to a series of drawings.
Figure 1 is a perspective view of the machine for the formation of crushed edible product paste balls object of the present invention.
Figure 2 is a sectional view of the cutting plane II-II of figure 1 of the machine for the formation of paste balls object of the invention.
Figure 3 is a sectional view of the cutting plane III-III of figure 2 of the machine for the formation of paste balls object of the invention.
Figure 4 is a perspective view of a particular embodiment of the tank of the collection and transport means of the paste balls of the machine for the formation of balls object of the present invention.
Figure 5 is a plan view of a particular embodiment of the collection and transport means of the paste balls of the machine for the formation of balls object of the invention.

In these figures reference is made to a set of elements, which are the following:
1. paste container deposit
2. rotating cylinder
3. paste dosing radial chambers
4. paste balls
5. paste ball collection and transport means
6. tank
7. recirculation circuit
8. tank initial section
9. tank final section
10. inlet section of the paste balls into the tank
11. tank water flow variation means
12. pistons of the paste intake and ejection mechanism
13. drive shaft of the piston axial lines
14. plates of the paste intake and ejection mechanism
15. rotating cylinder end covers
16. eccentric annular channel
17. first section of the eccentric annular channel
18. second section of the eccentric annular channel
19. third section of the eccentric annular channel
20. gate of the flow variation means
21. tank main duct
22. tank secondary duct
23. barrier
24. rotation direction of the rotating cylinder
25. crossbar of the barrier
26. barrier sections

### DESCRIPTION OF PREFERRED EMBODIMENTS OF THE INVENTION

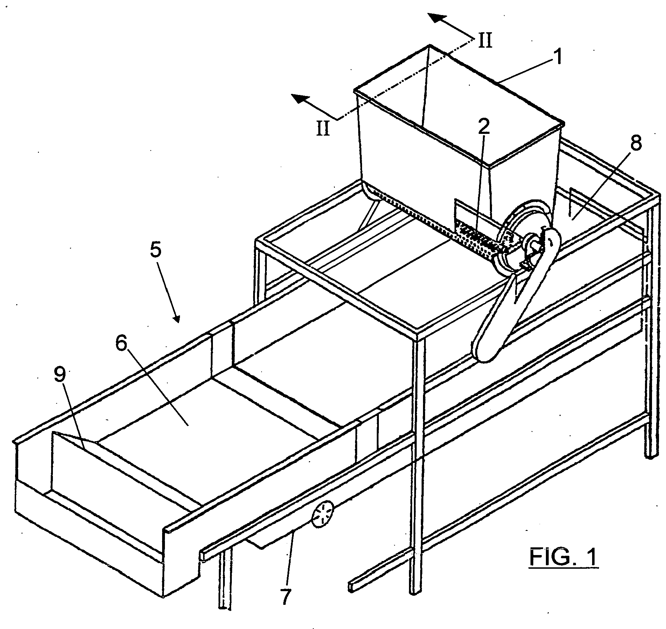

As it can be seen in figure 1, the object of the present invention is a machine for the formation of crushed edible product paste balls 4 to make fillings, mainly for previously de-stoned olives.

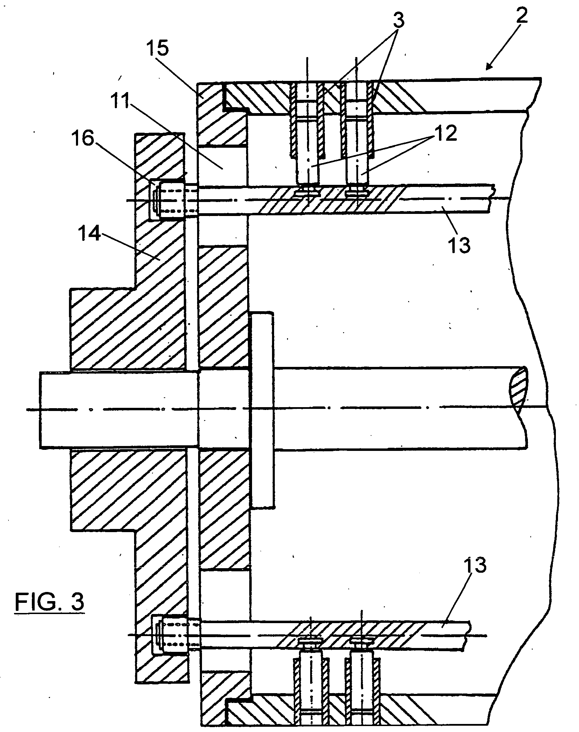

The machine is formed by a container deposit 1 of the paste which will be used to form the balls 4. The bottom of the deposit 1 is open, and the edge of the opening rests and hermetically closes on the lateral surface of a horizontal rotating cylinder 2 formed by a horizontal cylindrical wall closed by a cover 15 in each one of its ends, as it can be seen in figure 3. Inside the rotating cylinder 2 there is a horizontal rotation axis fixed to the covers 15 and connected to rotation means which make it rotate. The cylindrical wall of the rotating cylinder 2 has paste dosing radial chambers 3 aligned annularly and longitudinally in rows, each one of which is formed by a through-hole in which the bush is inserted in radial direction. In said radial chamber 3 a piston 12 is inserted which can run alternatively inside it. As it can be seen in figure 3, all pistons 12 belonging to the same longitudinal row of chambers 3 are connected at their most inner end to a drive shaft 13, therefore there will be as many shafts as rows of radial chambers 3. These shafts 13 go through the rotating cylinder 2 longitudinally and go through the covers 15, the ends of said shafts 13 being mounted on plates 14 parallel to the covers 15 of the rotating cylinder 2 ends, each one of them being arranged at one end of the rotating cylinder 2, as it can be seen in figure 3. The plates 14 have an eccentric annular channel 16, where the ends of the shafts 13 rest, and which serves as guide thereto, so that the path of the eccentric annular channel 16 leads the movement of the shafts 13 connected to the different rows of pistons 12, which in turn produces the alternative displacement of the pistons 12 for the intake and later ejection of the paste through the radial chambers 3.

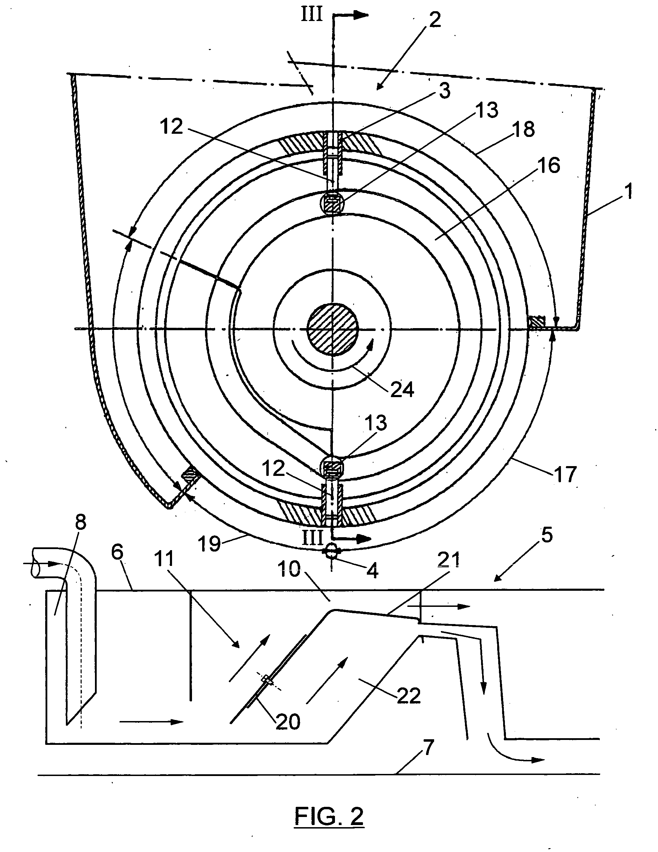

Figure 2 shows the configuration of the eccentric annular channel 16, and the different positions that each one of the drive shafts 13 and the pistons 12 connected thereto can take. The rotation direction of the rotating cylinder is marked by arrow 24. Following this rotation direction, the eccentric annular channel 16 has a first section 17 of constant maximum radius, which starts in the lowest point of the channel 16, point at which the pistons have ejected the paste balls 4 through the radial chambers 3. Next, the channel 16 presents a second section 18 with decreasing radius which produces a contraction movement of the pistons 12, and thus the intake of the paste into the radial chambers 3, taking their final section a constant radius. Finally, there exists a third straight section 19, tangential to this second section 18, and which ends at the lowest point of the channel 16, origin of the first section 17. Along this third section 19, the expansion of the pistons 12 occurs, thus producing the expulsion of the paste balls 4 from the radial chambers 3.

As shown in figures 1, 2, 4 and 5, the machine additionally has paste ball 4 collection and transport means 5, which are in charge of collecting said already-formed balls 4, and transporting them to a storage area, or to other machines which carry out the filling of the olives. These collection and transport means 5 are formed by an elongated tank 6 open at its upper part. As it can be seen in figure 1, the tank 6 is arranged under the deposit 1 and the rotating cylinder 2, transversely to said rotating cylinder 2, and with the same width as its length, in order to receive the paste balls 4 in the entire length of the rows of dosing radial chambers 3.

The tank 6 has an initial section 8, a final section 9, in which the already hardened paste balls 4 end, prepared for their later processing, and an inlet section 10 of the paste balls 4, located between the initial section 8 and the final section 9, right under the rotating cylinder 2, which is the point where the balls 4 fall from said rotating cylinder 2.

The tank 6 is filled with a hardening solution of the paste balls 4 in water, and said balls 4 float in said mix. As shown in figures 1 and 2, in a schematic manner, the water recirculates through a recirculation circuit 7, which absorbs the water of the final section 9 of the tank 6, and pours it into the initial section 8. In this way a current is originated which transports the paste balls 4 from the intake section 10 of the balls 4 to the final section 9 of the tank 6.

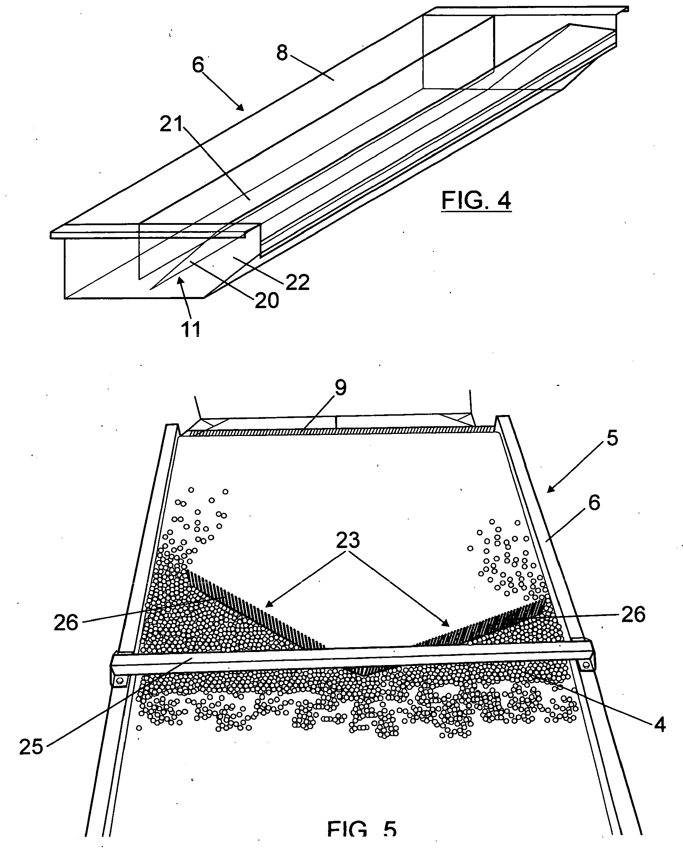

Additionally, the machine has water flow variation means 11 arranged in the tank 6, which vary the flow circulating in it, and thus change the speed of the paste ball 4 displacement along said tank 6. Figures 2 and 4 show a preferred embodiment of the flow variation means 11, in which they are formed by a mobile gate 20, which divides the tank 6 into two ducts, a main duct 21 through which the flow transporting the paste balls 4 circulates, and a secondary duct 22, through which part of the flow of the main duct 21 deviates through the gate 20.

Thus, the gate movement 20 enables to vary the size of ducts 21, 22, in such a way that the size increase of the main duct 21, which produces a reduction of the size of the secondary duct 22, produces the increase of the flow through the main duct 21, and thus an increase of the transport speed of the paste balls 4.

By contrast, the reduction of the size of the main duct 21, which produces an increase of the size of the secondary duct 22, produces a reduction of the flow through the main duct 21, and thus a reduction of the transport speed of the paste balls 4.

Besides, figure 5 shows a preferred embodiment of the present invention, in which the machine for the formation of paste balls 4 has, fixed to the tank 6, in a transverse manner to it, a mobile barrier 23, which enables the passage of water through it preventing the passage of the balls 4, which enables to retain them. As the barrier 23 offers different opening degrees, it enables greater or smaller flow of balls according to the specific needs. Particularly, as it can be seen in detail in figure 5, the mobile barrier 23 is formed by a crossbar 25 arranged transversely to the tank 6 in a position between the intake section 10 of the balls 4 and the final section 9, to which there are fixed two equal sections 26 formed by a plurality of partially submerged vertical bars, which have a separation between them, which enable the passage of circulating water, but not the passage of paste balls 4. These sections 26 are joined by their ends to the central point of the crossbar 25, which originates, as it can be seen in figure 5, that the barrier 23 enables the passage of the balls 4 through the sides of the tank, the space for the passage thereof being greater the more the barrier 23 is opened.

Once the invention has been clearly described, it is noted that the particular embodiments described above can be modified in detail as long as the main principle and essence of the invention are not modified.

## Claims

1. Machine for the formation of crushed edible product paste balls of the type comprising
- a deposit (1) containing the paste, closed in its lower part by
- a rotating cylinder (2) with horizontal axis, in turn comprising a plurality of radial paste dosing chambers (3), formed from the outer surface of said rotating cylinder (2) and aligned in an annular and axial manner,
- paste ball (4) collection and transport means (5), which comprise
- an elongated tank (6) open in its upper part, arranged under the deposit (1) and the rotating cylinder (2), transversely to said rotating cylinder (2), and having substantially the same width as the length of the rotating cylinder (2), and in turn comprising
- an initial section (8),
- a final section (9), where the already hardened paste balls (4) end, and
- an inlet section (10) of the paste balls (4), located between the initial section (8) and the final section (9), right under the rotating cylinder (2),
being said tank (6) filled with
- a hardening solution of the paste balls (4) in water, in which, in use, said paste balls (4) float, recirculating through
- a recirculation circuit (7) which, in use, absorbs the water in the final section (9) of the tank (6) and pours it in the initial section (8), originating a current which transports the paste balls (4) from the intake section (10) until the final section (9) of the tank (6), and
- water flow variation means (11) arranged in the tank (6) which, in use, vary the water flow circulating in the tank (6) in order to change the speed of the paste ball (4) displacement along said tank (6),
- a paste intake and ejection mechanism, which, in use, carries out the paste suction into the radial paste dosing chambers (3) of the rotating cylinder (2), and the later ejection of the paste balls (4) through said radial paste dosing chambers (3) into said paste ball collection and transport means (5),
**characterized in that** the water flow variation means (11) comprise
- a mobile gate (20) dividing the tank (6) into
- a main duct (21) through which the flow transporting the paste balls (4) circulates, and
- a secondary duct (22) through which part of the flow deviated from the main duct (21) by the gate (20) circulates, adapted for the movement of the gate (20) enabling the size variation of the main (21) and secondary (22) ducts, so that the size increase of the main duct (21) and the size reduction of the secondary duct (22) produce a flow increase through the main duct (21) and an increase of the transport speed of the paste balls (4), while the size reduction of the main duct (21) and the size increase of the secondary duct (22) produce a flow reduction through the main duct (21) and therefore, a reduction of the transport speed of the paste balls (4).

2. Machine for the formation of crushed edible product paste balls, according to claim 1, **characterized in that** the paste intake and ejection mechanism comprises
- a piston (12) arranged in each one of the paste dosing radial chambers (3), being said piston mobile along said radial chamber (3),
- a drive shaft (13) of the each one of the piston (12) axial lines which longitudinally goes through the rotating cylinder (2) and which ends are mounted on
- plates (14) parallel to the covers (15) of the rotating cylinder (2) ends, comprising an eccentric annular channel (16), where the ends of the drive shafts (13) of the piston (12) axial lines rest, the path of the eccentric annular channel (16) being led by the displacement of the shafts (13) which in turn produce the alternative movement of the pistons (12) for the intake and ejection of the paste through the aligned radial chambers (3).

3. Machine for the formation of crushed edible product paste balls, according to the preceding claim, **characterized in that** the eccentric annular channel (16) comprises, in the rotation direction of the rotating cylinder (2)
- a first section (17) of constant maximum radius from the lowest point of the channel (16), where, in use, the pistons (12) have ejected the paste balls (4) through the radial chambers (3),
- a second section (18) with decreasing radius, along which the pistons (12) retract and, in use, the intake of the paste into the radial chambers (3) is carried out, comprising a final section with a constant radius,
- a third section (19) tangential to this second section (18), which ends in the lowest point of the channel (16), and which is the origin of the first section (17), along which the pistons (12) are expanded and, in use, the ejection of the paste balls (4) is carried out from the radial chambers (3).

4. Machine for the formation of crushed edible product paste balls, according to any of the preceding claims, **characterized in that** it additionally comprises fixed to the tank (6), in a transverse manner to it, a mobile barrier (23), which enables the passage of water through it preventing the passage of the balls (4), and having different opening degrees to enable a greater or smaller flow of balls (4) as needed.

## Patentansprüche

1. Maschine zur Bildung von Bällchen von zerstoßenen, essbaren Produktpasten des Typs, der umfasst
- einen Speicherbehälter (1), der die Paste enthält, der unten geschlossen ist durch
- einen rotierenden Zylinder (2) mit horizontaler Achse, der seinerseits eine Vielzahl von radialen Pastendosierkammern (3) umfasst, die aus der Außenfläche des genannten rotierenden Zylinders (2) geformt sind und ringförmig und axial ausgerichtet sind,
- Sammel- und Fördermittel (5) für die Pastenbällchen (4) umfassend
- einen länglichen Tank (6), der oben offen ist, der unter dem Speicherbehälter (1) und dem rotierenden Zylinder quer zu dem genannten rotierenden Zylinder (2) angeordnet ist und im Wesentlichen die gleiche Breite wie die Länge des rotierenden Zylinders (2) aufweist und seinerseits umfasst:
- einen Anfangsabschnitt (8),
- einen Endabschnitt (9), in den die bereits gehärteten Pastenbällchen (4) letztendlich gelangen,
- einen Eintrittsabschnitt (10) der Pastenbällchen (4), der zwischen dem Anfangsabschnitt (8) und dem Endabschnitt (9) direkt unter dem rotierenden Zylinder (2) angeordnet ist,
wobei der genannte Tank (6) gefüllt ist mit
- einer die Pastenbällchen (4) härtenden Lösung in Wasser, worin die genannten Pastenbällchen (4) bei Betrieb schwimmen und umlaufen durch
- einen Umwälzkreislauf (7), der bei Betrieb das Wasser im Endabschnitt (9) des Tanks (6) ansaugt und in den Anfangsabschnitt (8) einleitet und so einen Strom erzeugt, der die Pastenbällchen (4) vom Eintrittsabschnitt (10) bis zum Endabschnitt (9) des Tanks (6) fördert,
- Wasserflussregulierungsmittel (11), die im Tank (6) angeordnet sind und bei Betrieb im Tank (6) zirkulieren, um die Geschwindigkeit der Bewegung des Pastenbällchens (4) entlang des genannten Tanks (6) zu ändern,
- einen Pastenaufnahme- und Auswurfmechanismus, der bei Betrieb die Pastenansaugung in die radialen Pastendosierkammern (3) des rotierenden Zylinders (2) und den späteren Auswurf der Pastenbällchen (4) durch die genannten radialen Pastendosierkammern (3) in die genannten Pastenbällchensammel- und Fördermittel (5) durchführt,
**dadurch gekennzeichnet, dass** die Wasserflussregulierungsmittel (11) umfassen
- einen beweglichen Schieber (20), der den Tank (6) unterteilt in
- einen Hauptkanal (21), durch den der die Pastenbällchen (4) fördernde Strom zirkuliert, und
- einen Sekundärkanal (22), durch den ein Teil des Stroms, der von dem Hauptkanal (21) durch den Schieber (20) abgelenkt wird, fließt, angepasst zur Bewegung des Schiebers (20), wodurch die Größenänderung des Haupt- (21) und des Sekundärkanals (22) ermöglicht wird, sodass die Vergrößerung des Hauptkanals (21) und die Verkleinerung des Sekundärkanals (22) eine erhöhte Strömung durch den Hauptkanal (21) und eine erhöhte Fördergeschwindigkeit der Pastenbällchen (4) bewirken, während die Verkleinerung des Hauptkanals (21) und die Vergrößerung des Sekundärkanals (22) eine verringerte Strömung durch den Hauptkanal (21) und damit eine verringerte Fördergeschwindigkeit der Pastenbällchen (4) bewirken.

2. Maschine zur Bildung von Bällchen von zerstoßenen, essbaren Produktpasten nach Anspruch 1, **dadurch gekennzeichnet, dass** der Pastenaufnahme- und Auswurfmechanismus umfasst
- einen Kolben (12), der an jeder der radialen Pastendosierkammern (3) angeordnet ist, wobei der genannte Kolben entlang der genannten radialen Kammer (3) beweglich ist,
- eine Antriebswelle (13) an jeder der jeweiligen axialen Linien des Kolbens (12), die in Längsrichtung durch den rotierenden Zylinder (2) verläuft und deren Enden befestigt sind an
- Platten (14) parallel zu den Abdeckungen (15) der Enden des rotierenden Zylinders (2), umfassend einen exzentrischen Rundkanal (16), in dem die Enden der Wellen (13) der axialen Linien der Kolben (12) gelagert sind, wobei die Bahn des exzentrischen Rundkanals (16) vom Verfahren der Wellen (13) bestimmt wird, die wiederum die abwechselnde Bewegung der Kolben (12) für den Ein- und Austritt der Paste durch die radial ausgerichteten Kammern (3) bewirken.

3. Maschine zur Bildung von Bällchen von zerstoßenen, essbaren Produktpasten nach dem vorstehenden Anspruch, **dadurch gekennzeichnet, dass** der exzentrische Rundkanal (16) in Drehrichtung des rotierenden Zylinders (2) umfasst
- einen ersten Abschnitt (17) mit gleichbleibendem maximalen Radius ab dem tiefsten Punkt des Kanals (16), an dem die Kolben (12) bei Betrieb die Pastenbällchen (4) durch die radialen Kammern (3) ausgeworfen haben,
- einen zweiten Abschnitt (18) mit abnehmendem Radius, an dem entlang die Kolben (12) einfahren und in dem bei Betrieb die Aufnahme der Paste in die radialen Kammern (3) erfolgt, umfassend einen abschließenden Abschnitt mit gleichbleibendem Radius,
- einen dritten Abschnitt (19) tangential zu diesem zweiten Abschnitt (18), der am tiefsten Punkt des Kanals (16) endet, welcher der Ausgangspunkt des ersten Abschnitts (17) ist, entlang dem die Kolben (12) ausfahren, und in dem bei Betrieb der Auswurf der Pastebällchen (4) aus den radialen Kammern (3) erfolgt.

4. Maschine zur Bildung von Bällchen von zerstoßenen, essbaren Produktpasten nach einem der vorstehenden Ansprüche **dadurch gekennzeichnet, dass** sie zusätzlich eine am Tank (6) quer zu diesem befestigte bewegliche Sperre (23) umfasst, die Wasser durchlässt und den Durchtritt von Bällchen (4) verhindert, und die unterschiedlichen Öffnungsstufen besitzt, um je nach Bedarf einen größeren oder kleineren Durchfluss von Bällchen (4) zu ermöglichen.

## Revendications

1. Machine pour la formation de boules de pâte de produits comestibles broyés du type comprenant
- un dépôt (1) contenant la pâte, fermé dans sa partie inférieure par
- un cylindre rotatif (2) à axe horizontal, comprenant à son tour une pluralité de chambres de dosage de pâte radiales (3), formées à partir de la surface extérieure dudit cylindre rotatif (2) et alignées d'une manière annulaire et axiale,
- des moyens (5) de collecte et de transport de boules de pâte (4), qui comprennent
- un réservoir allongé (6) ouvert dans sa partie supérieure, disposé sous le dépôt (1) et le cylindre rotatif (2), transversalement audit cylindre rotatif (2), et ayant sensiblement la même largeur que la longueur du cylindre rotatif (2), et comprenant à son tour
- une section initiale (8),
- une section finale (9), où se terminent les boules de pâte déjà durcies (4), et
- une section d'entrée (10) des boules de pâte (4), située entre la section initiale (8) et la section finale (9), juste sous le cylindre rotatif (2),
ledit réservoir (6) étant rempli avec
- une solution de durcissement des boules de pâte (4) dans l'eau, dans laquelle, en cours d'utilisation, lesdites boules de pâte (4) flottent, recirculant à travers
- un circuit de recirculation (7) qui, en cours d'utilisation, absorbe l'eau dans la section finale (9) du réservoir (6) et la verse dans la section initiale (8), donnant naissance à un courant qui transporte les boules de pâte (4) de la section d'admission (10) jusqu'à la section finale (9) du réservoir (6), et
- des moyens (11) de variation de l'écoulement d'eau disposés dans le réservoir (6) qui, en cours d'utilisation, font varier l'écoulement d'eau qui circule dans le réservoir (6) afin de modifier la vitesse de déplacement de la boule de pâte (4) le long dudit réservoir (6),
- un mécanisme d'admission et d'éjection de pâte qui, en cours d'utilisation, réalise l'aspiration de la pâte dans les chambres de dosage de pâte radiales (3) du cylindre rotatif (2), et l'éjection ultérieure des boules de pâte (4) à travers lesdites chambres de dosage de pâte radiales (3) dans lesdits moyens (5) de collecte et transport des boules de pâte,
**caractérisée en ce que** les moyens (11) de variation de l'écoulement d'eau comprennent
- une porte mobile (20) divisant le réservoir (6) en
- un conduit principal (21) par lequel circule l'écoulement transportant les boulles de pâte (4), et
- un conduit secondaire (22) par lequel circule une partie de l'écoulement dévié du conduit principal (21) par la porte (20), adapté pour que le déplacement de la porte (20) permette la variation de taille des conduits principal (21) et secondaire (22), de sorte que l'augmentation de la taille du conduit principal (21) et la réduction de la taille du conduit secondaire (22) produisent une augmentation de l'écoulement à travers le conduit principal (21) et une augmentation de la vitesse de transport des boules de pâte (4), tandis que la réduction de la taille du conduit principal (21) et l'augmentation de la taille du conduit secondaire (22) produisent une réduction de l'écoulement à travers le conduit principal (21) et donc une réduction de la vitesse de transport des boules de pâte (4).

2. Machine pour la formation de boules de pâte de produits comestibles broyés, selon la revendication 1, **caractérisée en ce que** le mécanisme d'admission et d'éjection de pâte comprend
- un piston (12) disposé dans chacune des chambres radiales de dosage de pâte (3), ledit piston étant mobile le long de ladite chambre radiale (3),
- un arbre d'entraînement (13) de chacune des lignes axiales du piston (12) qui traverse longitudinalement le cylindre rotatif (2) et dont les extrémités sont montées sur
- des plaques (14) parallèles aux couvercles (15) des extrémités du cylindre rotatif (2), comprenant un canal annulaire excentrique (16), où reposent les extrémités des arbres d'entraînement (13) des lignes axiales du piston (12), le trajet du canal annulaire excentrique (16) étant conduit par le déplacement des arbres (13) qui produisent à leur tour le mouvement alternatif des pistons (12) pour l'admission et l'éjection de la pâte à travers les chambres radiales alignées (3).

3. Machine pour la formation de boules de pâte de produits comestibles broyés, selon la revendication précédente, **caractérisée en ce que** le canal annulaire excentrique (16) comprend, dans le sens de rotation du cylindre rotatif (2)
- une première section (17) de rayon maximum constant à partir du point le plus bas du canal (16), où, en cours d'utilisation, les pistons (12) ont éjecté les boulles de pâte (4) à travers les chambres radiales (3),
- une deuxième section (18) à rayon décroissant, le long de laquelle les pistons (12) se rétractent et, en cours d'utilisation, l'admission de la pâte dans les chambres radiales (3) est réalisée, comprenant une section finale à rayon constant,
- une troisième section (19) tangentielle à cette deuxième section (18), qui se termine au point le plus bas du canal (16), et qui est à l'origine de la première section (17), le long de laquelle les pistons (12) sont déployés et, en cours d'utilisation, l'éjection des boulles de pâte (4) est réalisée à partir des chambres radiales (3).

4. Machine pour la formation de boules de pâte de produits comestibles broyés, selon l'une quelconque des revendications précédentes, **caractérisée en ce qu'**elle comprend en outre, fixée au réservoir (6), de manière transversale à celui-ci, une barrière mobile (23), qui permet le passage de l'eau à travers celle-ci empêchant le passage des boules (4), et ayant différents degrés d'ouverture pour permettre un écoulement plus ou moins important des boules (4), selon les besoins.
